# EUROPÄISCHE PATENTSCHRIFT

(11) **EP 2 788 196 B1**
(45) Veröffentlichungstag und Bekanntmachung des Hinweises auf die Patenterteilung: **19.08.2015**
(21) Anmeldenummer: 12797940.9
(22) Anmeldetag: 07.12.2012
(51) Int. Cl.: B41N 6/00, C03C 25/00, C08J 5/08

(54) **GLASFASERVERSTÄRKTE HÜLSE FÜR DIE DRUCKINDUSTRIE**
GLASS FIBER-REINFORCED SLEEVE FOR THE PRINTING INDUSTRY
MANCHON RENFORCÉ DE FIBRES DE VERRE POUR L'INDUSTRIE TYPOGRAPHIQUE

(30) Priorität: 09.12.2011 EP 11192780
(43) Veröffentlichungstag der Anmeldung: 15.10.2014
(73) Patentinhaber: Flint Group Germany GmbH, 70469 Stuttgart (DE)
(72) Erfinder: KLITZA, Alexander, 46395 Bocholt (DE)
(74) Vertreter: Schuck, Alexander
(86) Internationale Anmeldenummer: PCT/EP2012/074832
(87) Internationale Veröffentlichungsnummer: WO 2013/083797

(56) Entgegenhaltungen:
- EP-A2- 0 781 654
- DE-C1- 19 634 033
- US-A1- 2003 157 285

## Beschreibung

Die vorliegende Erfindung betrifft ein Verfahren zur Herstellung von elektrisch leitenden, glasfaserverstärkten Hülsen für die Druckindustrie mittels UV-Härtung sowie mittels dieses Verfahrens hergestellte Druckhülsen.

Beim flexographischen Drucken können die eingesetzten Flexodruckplatten prinzipiell direkt auf dem Druckzylinder aufgebracht werden, beispielsweise indem man sie mit doppelseitigem Klebeband auf den Druckzylinder aufklebt.

Um einen schnellen Druckplattenwechsel zu ermöglichen ist jedoch die Verwendung so genannter Sleeves üblich. Bei einem Sleeve handelt es sich um einen zylindrischen Hohlkörper, auf den die Druckplatten montiert werden, oder der auch vollständig mit einer Druckschicht umhüllt sein kann. Die Sleeve-Technik ermöglicht einen sehr schnellen und einfachen Wechsel der Druckform. Der Innendurchmesser der Sleeves entspricht nahezu dem Außendurchmesser des Druckzylinders, so dass die Sleeves einfach über den Druckzylinder der Druckmaschine geschoben werden können. Das Auf- und Abschieben der Sleeves funktioniert fast ausnahmslos nach dem Luftkissenprinzip: Für die Sleeve-Technologie ist die Druckmaschine mit einem speziellen Druckzylinder, einem so genannten Luftzylinder, ausgestattet. Der Luftzylinder verfügt über einen Druckluftanschluss an der Stirnseite, mit dem Druckluft in das Innere des Zylinders geleitet werden kann. Von dort aus kann sie über an der Außenseite des Zylinders angeordnete Löcher wieder austreten. Zur Montage eines Sleeves wird Druckluft in den Luftzylinder eingeleitet und tritt an den Austrittslöchern wieder aus. Der Sleeve kann nun auf den Luftzylinder aufgeschoben werden, weil er sich unter dem Einfluss des Luftkissens geringfügig dehnt und das Luftkissen die Reibung deutlich vermindert. Wenn die Druckluftzufuhr abgeschaltet wird, geht die Dehnung zurück und der Sleeve sitzt auf der Oberfläche des Luftzylinders fest. Weitere Einzelheiten zur Sleeve-Technik sind beispielsweise in "Technik des Flexodrucks", S. 73 ff., Coating Verlag, St. Gallen, 1999 offenbart.

Moderne Sleeves weisen üblicherweise einen mehrschichtigen Aufbau auf. Hierzu sei beispielsweise auf US 6,703,095 B2 verwiesen. Die Basis bildet bei modernen Sleeves eine dünne hohlzylinderförmige Hülse, auch Druckhülse genannt. Hierauf können eine oder mehrere weitere Schichten aus einem polymeren Material aufgebracht werden.

Die genannte Hülse besteht üblicherweise aus faserverstärkten polymeren Materialien. Zur Herstellung können Glasfasern, Glasfasernetze oder auch Kohlefasern in Kombination mit thermisch härtbaren Harzen oder mit UV-härtbaren Harzen wie beispielsweise Polyesterharzen oder Epoxyharzen verwendet werden. Beispielsweise können die Glasfasern bzw. Glasfasernetze mit den besagten Harzen getränkt, um einen rotierenden Kern gewickelt und anschließend thermisch oder mittels UV-Licht gehärtet werden. Die Glasfasern werden üblicherweise vor der Verwendung mit geeigneten Haftvermittlern beschichtet, um eine möglichst gute Haftung zwischen der Glasfaser und dem Harz, in das die Glasfasern eingebettet sind, zu erreichen.

Die UV-Härtung der ungehärteten Hülsen für die Druckindustrie ist schneller und zuverlässiger als die thermische Härtung, und ist daher eine bevorzugte Technik.

Die genannten Polymerharze sind nicht elektrisch leitend. Es ist eine verbreitete technische Anforderung, dass die Druckhülsen eine gewisse elektrische Leitfähigkeit aufweisen sollen, um eine leitfähige Verbindung zwischen der Sleeveoberfläche und dem metallischen Druckzylinder herzustellen. Hierdurch soll die elektrostatische Aufladung der Sleeves während des Druckens vermieden werden.

Während die Anforderung nach einer gewissen elektrischen Leitfähigkeit bei thermisch härtenden Systemen vergleichsweise einfach zu verfüllen ist, beispielsweise indem man elektrisch leitfähige Partikel wie Ruß unter das Harz mischt, bereitet diese Anforderung bei der Herstellung von Druckhülsen mit UV-härtbaren Harzen große Probleme, weil ein Ruß-haltiges Harz nicht UV-transparent ist und daher auch keine UV-Härtung mehr möglich ist.

DE 27 00 118 C2 offenbart die Herstellung einer Hülse zum Aufschieben auf Druckzylinder unter Verwendung von glasfaserverstärktem Harz, beispielsweise glasfaserverstärktem Polyesterharz oder glasfaserverstärktem Epoxyharz.
DE 196 34 033 C1 offenbart eine Hülse zum Aufschieben auf Druckzylinder, welche eine nahtlose Innenschicht aus faserverstärktem Kunststoff umfasst. Darauf ist eine Außenschicht aus einem elektrisch leitfähigen, elastischen Material aufgebracht. Um elektrische Leitfähigkeit zur Vermeidung elektrostatischer Aufladung zu gewährleisten, umfasst die Innenschicht ein elektrisch leitfähiges Metallgeflecht, das mindestens an einer Stelle den Druckzylinder -wenn die Hülse auf diesen aufgeschoben ist- und an mindestens einer Stelle die elektrisch leitfähige Außenschicht berührt.

EP 943 432 A1 offenbart eine Hülse zum Aufschieben auf Druckzylinder, welche eine nahtlose Innenschicht aus faserverstärktem Kunststoff umfasst. Darauf ist eine Außenschicht aus einem elektrisch leitfähigen, elastischen Material aufgebracht. Um elektrische Leitfähigkeit zur Vermeidung elektrostatischer Aufladung zu gewährleisten, umfasst die Innenschicht elektrisch leitfähige Fäden, beispielsweise Kupferfäden, wobei dadurch an mindestens einer Stelle eine elektrisch leitfähige Verbindung zwischen dem Druckzylinder -wenn die Hülse auf diesen aufgeschoben ist- und der Außenschicht besteht.

WO 99/44957 offenbart beschichtete Glasfasern bzw. Glasfaserbündel. Die Beschichtung wird mit einer wässrigen Formulierung vorgenommen, welche ein polymeres Material sowie anorganische Partikel mit einer hohen Wärmeleitfähigkeit aufweist.

JP 09-208 268 A offenbart die Beschichtung von Glasfasern mit Formulierungen, welche Partikel von kolloidalem SiO₂, Calciumcarbonat, Kaolin oder Talk umfassen, wobei der durchschnittliche Durchmesser 5 bis 2000 nm beträgt. Die Partikel werden in einer Menge von 0,001 bis 2,0 Gew.-% bezogen auf die Glasfaser an die Glasfaser gebunden.

Aufgabe der Erfindung ist es, ein Verfahren zur Herstellung von glasfaserverstärkten, elektrisch leitfähigen Druckhülsen mittels UV-Härtung bereitzustellen.

Überraschenderweise wurde gefunden, dass dieses Ziel erreicht werden kann, indem man die verwendeten Glasfasern mit elektrisch leitfähigen Nanopartikeln beschichtet und die derart beschichteten Glasfasern zur Herstellung von Hülsen für die Druckindustrie verwendet. Dementsprechend wurde ein Verfahren zur Herstellung von glasfaserverstärkten Hülsen für die Druckindustrie mittels UV-Härtung gefunden, welches mindestens die folgenden Verfahrensschritte aufweist:
(1) Formen einer UV-härtbaren Hülse aus Glasfasern sowie einem UV-härtbaren Harz,
(2) Aushärten der Hülse durch Bestrahlung mit UV-Strahlung,
wobei die verwendeten Glasfasern in einem vorgelagerten Verfahrensschritt mit einer haftvermittelnden Beschichtung versehen werden, und die zur Beschichtung verwendete Formulierung elektrisch leitfähige Nanopartikel umfasst.

In einer bevorzugten Ausführungsform der Erfindung handelt es sich bei den elektrisch leitfähigen Nanopartikeln um Kohlenstoffnanoröhren.

In einem zweiten Aspekt der Erfindung wurde eine glasfaserverstärkte Hülse für die Druckindustrie gefunden, welche mindestens Glasfasern sowie ein gehärtetes Harz umfasst, und wobei die Glasfasern eine haftvermittelnde Beschichtung umfassend elektrisch leitfähige Nanopartikel aufweisen.

In einem dritten Aspekt der Erfindung wurde die Verwendung der erfindungsgemäßen Hülsen zum Drucken gefunden.

Zu der Erfindung ist im Einzelnen das Folgende auszuführen:

Die erfindungsgemäßen Hülsen für die Druckindustrie weisen in prinzipiell bekannter Art und Weise die Form eines Hohlzylinders auf. Sie sind zum Aufbringen auf einen metallischen Druckzylinder vorgesehen.

Für das erfindungsgemäße Verfahren werden in einem ersten Verfahrensschritt Glasfasern mit einer haftvermittelnden Beschichtung versehen, wobei die haftvermittelnde Beschichtung elektrisch leitfähige Nanopartikel umfasst.

Bei den eingesetzten Glasfasern kann es sich bevorzugt um Filamente handeln, es können aber prinzipiell auch vorgefertigte Glasfasernetze oder Glasfasergewebe eingesetzt werden. Geeignete Glasfasern sind dem Fachmann prinzipiell bekannt. Beispielsweise können Glasfasern mit einem Längengewicht von 600 bis 800 tex verwendet werden.

Haftvermittelnde Beschichtungen für Glasfasern sind dem Fachmann prinzipiell bekannt. Zur Verbesserung der Haftung können erfindungsgemäß bevorzugt organofuktionelle Silane eingesetzt werden, insbesondere solche der Struktur R-Si(OR')₃. Hierbei ist R eine organische Gruppe, die mit organischen Materialien, beispielsweise polymeren Materialien wechselwirken kann, und die Gruppen OR' sind leicht hydrolysierbare Gruppen wie Methoxy- oder Ethoxygruppen. Die Alkoxygruppen können bei Anwesenheit von Feuchtigkeit hydrolysieren, und die gebildeten Silanolgruppen reagieren mit der Glasoberfläche. Die Gruppe R weist von der Glasoberfläche weg und vermittelt eine gute Haftung der beschichteten Glasfasern mit organischen Materialien. Beispielsweise kann es sich um aminofunktionelle Silane handeln, d.h. die Gruppe R weist Aminogruppen auf. Derartige Haftvermittler sind kommerziell erhältlich.

Erfindungsgemäß umfasst die zur Beschichtung verwendete Formulierung elektrisch leitfähige Nanopartikel.

Der Begriff "Nanopartikel" ist dem Fachmann prinzipiell bekannt. Es handelt sich hierbei um sehr kleine Partikel, bei denen die Partikelgröße bereits einen signifikanten Einfluss auf die chemischen und physikalischen Eigenschaften hat. Erfindungsgemäß werden im Regelfalle Nanopartikel mit einer Partikelgröße von weniger als 100 nm eingesetzt, beispielsweise 1 bis 100 nm, bevorzugt 1 bis 10 nm und besonders bevorzugt 1 bis 5 nm. Sofern es sich um kugelförmige oder annähernd kugelförmige Partikel handelt, bezieht sich diese Größe auf den Durchmesser. Für den Fachmann ist klar, dass es sich bei diesen Werten um Durchschnittswerte handelt. Handelt es sich um stäbchenförmige Partikel, bezieht sich diese Angabe auf die Dicke.

Es kann sich im Prinzip um beliebige Nanopartikel handeln, vorausgesetzt, sie weisen eine gewisse elektrische Leitfähigkeit auf. In einer bevorzugten Ausführungsform der Erfindung handelt es sich bei den Nanopartikeln um Kohlenstoffnanoröhren. Kohlenstoffnanoröhren sind dem Fachmann prinzipiell bekannt. Der Durchmesser der eingesetzten Kohlenstoffnanoröhren kann 1 bis 50 nm betragen. Bevorzugt zur Ausführung der Erfindung sind Kohlenstoffnanoröhren mit einem Durchmesser von 1 bis 10 nm und besonders bevorzugt 1 bis 5 nm. Es kann sich um einwandige oder um mehrwandige, beispielsweise zweiwandige Kohlenstoffnanoröhren handeln. Naturgemäß ist die Länge bei Röhren größer als der Durchmesser. Das Länge / Dicke - Verhältnis beträgt im Regelfalle mindestens 10:1, beispielsweise 10:1 bis 1000:1. Die Länge von Kohlenstoffnanoröhren der genannten Dicke kann beispielsweise ca. 1,5 µm betragen.

In einer Ausführungsform der Erfindung handelt es sich bei den elektrisch leitfähigen Nanopartikeln um einwandige Kohlenstoffnanoröhren.
In einer weiteren Ausführungsform der Erfindung handelt es sich bei den elektrisch leitfähigen Nanopartikeln um mehrwandige Kohlenstoffnanoröhren.

Die Menge der elektrischen leitfähigen Nanopartikel, insbesondere der Kohlenstoffnanoröhren, wird vom Fachmann je nach den gewünschten Eigenschaften der Hülse für die Druckindustrie bestimmt, insbesondere der gewünschten Leitfähigkeit. Sie können beispielsweise in einer Menge von 0,5 bis 50 Gew.-% eingesetzt werden. Bevorzugt beträgt der Gewichtsanteil der Nanopartikel in der Beschichtung 0,5 bis 40 Gew. %, besonders bevorzugt 20 bis 40 Gew.-% bezüglich der Summe aller Bestandteile der Beschichtung.

Die Menge der Beschichtung bezogen auf die Glasfaser wird vom Fachmann je nach den gewünschten Eigenschaften der Glasfasern bzw. der damit herzustellenden Hülsen für die Druckindustrie bestimmt. Bewährt hat es sich, die Beschichtung in einer Menge von 0,1 bis 5 Gew.-%, bevorzugt 1 bis 5 Gew.-% und besonders bevorzugt 1,5 bis 4 Gew.-% bezüglich der Glasfasern einzusetzen.

Zur Beschichtung der Glasfasern werden die zur Beschichtung verwendeten Formulierungen, insbesondere organofunktionelle Silane mit den Nanopartikeln gemischt und mittels üblicher Techniken auf die Glasfasern aufgetragen. So können die Nanopartikel in der Schlichte enthalten sein, die während des Fadenziehvorgangs auf den Spinnfaden (Filament) aufgebracht wird. Neben den organofunktionellen Silanen und den Nanopartikeln kann die Schlichte noch übliche Filmbildner, Weichmacher, Netzmittel und Antistatika enthalten. Beschrieben wird die Herstellung von Glasfasern beispielsweise in M. Flemming, G. Zimmermann, S. Roth, Faserverbundbauweisen, Springer-Verlag Berlin Heidelberg 1995, Kapitel 2.3.

Als UV-härtbare Harze zur Herstellung der Hülse können dem Fachmann bekannte und kommerziell erhältliche UV-härtbare Harze verwendet werden, beispielsweise Harze auf Basis von Polyesteracrylaten, Epoxidacrylaten, Polyetheracrylaten oder Urethanacrylaten. Das UV-härtbare Harz kann auch selbst elektrisch leitfähig sein, bevorzugt handelt es sich um ein übliches Harz, welches nicht elektrisch leitfähig ist. Bevorzugt können Polyester- und Urethanacrylate eingesetzt werden. Derartige Harzformulierungen sind kommerziell erhältlich und können selbstverständlich noch weitere Komponenten umfassen.

Das Formen der UV-härtbaren Hülse aus den Glasfasern und dem UV-härtbaren Harz kann prinzipiell nach dem Fachmann bekannten Methoden vorgenommen werden. Beispielsweise können die Hülsen weitgehend manuell hergestellt werden. Hierzu kann man einen zylinderförmigen rotierenden Kern verwenden, Glasfasern bzw. Glasfasernetze nach und nach um den Kern wickeln und schichtweise UV-härtbares Harz auftragen, bis die gewünschte Dicke erreicht ist.

In einer bevorzugten Ausführungsform des Verfahrens kann die Herstellung mittels des Filament-Winding-Verfahrens vorgenommen werden. Hierzu werden Glasfasern abrollbar auf so genannten Spulenständern vorgehalten. Als Form wird ein rotierender, zylinderförmiger Kern verwendet, auf den die Fasern aufgebracht werden, wobei die Glasfasern vor dem Aufbringen auf den Kern mit dem UV-härtbaren Harz getränkt werden.

Die Glasfasern werden lage- und spannungsgeführt auf den rotierenden, zylinderförmigen Kern aufgebracht, bis die gewünschte Wandstärke erreicht ist.

Nach dem Erreichen der gewünschten Wandstärke wird die Hülse in Verfahrensschritt (2) durch Bestrahlung mit UV-Strahlung ausgehärtet. Dies kann bevorzugt erfolgen, indem die Hülse auf dem zylinderförmigen Kern rotiert. Hierdurch wird eine besonders gleichmäßige UV-Härtung erreicht.

Die UV-Härtung ist bei dem erfindungsgemäßen Verfahren möglich, selbst wenn die verwendeten elektrisch leitfähigen Nanopartikel, wie beispielsweise die verwendeten Kohlenstoffnanoröhren UV-Licht absorbieren können. Durch die Beschichtung der Glasfasern mit den Nanopartikeln lässt sich deren Menge nämlich im Vergleich zum Zusatz elektrisch leitfähiger Partikel zum Harz deutlich reduzieren. Die Nanopartikel befinden sich nur auf der Oberfläche der Glasfasern. Weil sich die Glasfasern in der Hülse berühren, werden elektrisch leitende Verbindungen geschaffen, auch wenn das Harz zwischen den Fasern keine Leitfähigkeit aufweist.

Die Wandstärke der gehärteten Hülsen für die Druckindustrie richtet sich je nach dem Verwendungszweck der Sleeves. Sie kann insbesondere 0,2 bis 10 mm betragen, bevorzugt 0,5 mm bis 2 mm.

Die Länge der Hülsen richtet sich je nach dem Verwendungszweck der Hülsen. Sie kann 200 mm bis 4000 mm, bevorzugt 400 mm bis 2000 mm betragen, ohne dass die Erfindung damit auf diesen Bereich beschränkt sein soll.

Der Anteil der Glasfasern in der Hülse wird vom Fachmann je nach den gewünschten Eigenschaften der glasfaserverstärkten Hülse bestimmt. Er sollte im Regelfalle 50 Gew.-% nicht unterschreiten, um ausreichende mechanische Stabilität und ausreichende elektrische Leitfähigkeit sicherzustellen. Bevorzugt beträgt die Menge 55 bis 80 Gew.-% bezüglich der Summer aller Bestandteile der glasfaserverstärkten Hülse.
Vorteilhaft umfasst das erfindungsgemäße Verfahren einen weiteren Verfahrensschritt, bei dem man die Hülsen zusätzlich mit einem metallischen Bauteil zur Verbesserung der Ableitung elektrischer Ladung von der Hülse auf einen metallischen Druckzylinder versieht, wobei das Bauteil die innere Außenfläche der Hülse mit dem Inneren der Hülsenwandung verbindet.

Es handelt sich hierbei um ein Metallteil, welches so beschaffen ist, dass es nach dem Aufschieben der Hülse auf einen metallischen Druckzylinder den Druckzylinder berührt, so dass eine elektrisch leitende Verbindung zum Druckzylinder geschaffen wird. Weiterhin reicht das Metallteil in das Innere der Wandung der Hülse. Hierdurch wird die Ableitung elektrischer Ladungen aus der Hülse zum Druckzylinder verbessert.

Bei dem metallischen Bauteil kann es sich beispielsweise um einen metallischen Kontaktstift handeln, der in die Wandung der Hülse eingesetzt wird, einen metallischen Ring, der seitlich auf die Hülse gesetzt wird, oder eine Lochzunge, welche an der Innenseite am einen Ende der Hülse eingesetzt wird. Eine Lochzunge dient auch dazu, die Hülse auf einem Druckzylinder mit einem Registerelement zu positionieren. Mittels des erfindungsgemäßen Verfahrens werden in einem Verfahren unter Verwendung von UV-Härtung elektrisch leitfähige Hülsen für die Druckindustrie erhalten. Die Leitfähigkeit kann vom Fachmann u.a. über die Menge der Glasfasern und die Menge der zur Beschichtung der Glasfasern eingesetzten elektrisch leitfähigen Partikel eingestellt werden. Die Leitfähigkeit soll hierbei zumindest so groß sein, um eine elektrostatische Aufladung des Hülse bzw. des gesamten Sleeves während des Druckvorganges zu verhindern. Im Regelfalle sollte der elektrische Widerstand der Druckhülse 1 MΩ nicht überschreiten.

Die erfindungsgemäßen Hülsen für die Druckindustrie können mittels des beschriebenen, erfindungsgemäßen Verfahrens erhalten werden. Sie umfassen Glasfasern sowie ein gehärtetes Harz, wobei die Glasfasern eine haftvermittelnde Beschichtung umfassend elektrisch leitfähige Nanopartikel aufweisen. Der Aufbau und die bevorzugten Parameter der Druckhülsen wurden bereits beschrieben.

Auf der äußeren Oberfläche der glasfaserverstärkten Hülse können noch weitere Schichten unterschiedlicher Zusammensetzung aufgebracht sein. Beispielsweise können eine oder mehrere Schichten aus elastomeren oder duroplastischen polymeren Materialien aufgebracht werden. Geeignete Schichtfolgen sind dem Fachmann bekannt. Hierdurch lässt sich beispielsweise die Drucklänge einstellen.

Die erfindungsgemäßen Hülsen können in prinzipiell bekannter Art und Weise zum Drucken verwendet werden, beispielsweise zum Flexodruck. Es kann sich hierbei um die beschriebenen glasfaserverstärkten Hülsen als solche handeln, oder um Hülsen, auf die noch weitere Schichten aufgebracht wurden. Hierzu wird die Hülse mit einer die äußere Oberfläche ganz oder teilweise umhüllenden Druckschicht versehen. Beispielsweise kann man Druckplatten auf die Hülse aufkleben, oder man kann eine endlos-nahtlose Druckschicht aufbringen. Techniken zum Aufbringen endlos-nahtloser Druckschichten sind dem Fachmann bekannt. Die mit der Druckschicht versehene Hülse wird mittels der eingangs beschriebenen Methode auf einen Druckzylinder, insbesondere einen metallischen Druckzylinder einer Druckmaschine montiert. Mit dem so ausgerüsteten Druckzylinder wird gedruckt.

## Patentansprüche

1. Verfahren zur Herstellung von glasfaserverstärkten Hülsen für die Druckindustrie mittels UV-Härtung, umfassend mindestens die folgenden Verfahrensschritte:
(1) Formen einer UV-härtbaren Hülse aus Glasfasern sowie einem UV-härtbaren Harz,
(2) Aushärten der Hülse durch Bestrahlung mit UV-Strahlung,
wobei man die verwendeten Glasfasern in einem vorgelagerten Verfahrensschritt mit einer haftvermittelnden Beschichtung versieht, **dadurch gekennzeichnet, dass** die zur Beschichtung verwendete Formulierung elektrisch leitfähige Nanopartikel umfasst.

2. Verfahren gemäß Anspruch 1, **dadurch gekennzeichnet, dass** es sich bei den elektrisch leitfähigen Nanopartikeln um Kohlenstoffnanoröhren handelt.

3. Verfahren gemäß einem der Ansprüche 1 oder 2, **dadurch gekennzeichnet, dass** die haftvermittelnde Beschichtung organofunktionelle Silane umfasst.

4. Verfahren gemäß einem der Ansprüche 1 bis 3, **dadurch gekennzeichnet, dass** der Gewichtsanteil der Nanopartikel in der Beschichtung 0,5 bis 40 Gew.-% bezüglich der Summe aller Bestandteile der Beschichtung beträgt.

5. Verfahren gemäß einem der Ansprüche 1 bis 4, **dadurch gekennzeichnet, dass** die Beschichtung in einer Menge von 0,1 bis 5 Gew.-% bezüglich der Glasfasern eingesetzt wird.

6. Verfahren gemäß einem der Ansprüche 1 bis 5, **dadurch gekennzeichnet, dass** man Verfahrensschritt (1) mittels des Filament-Winding-Verfahrens vornimmt, wobei mit dem UV-härtbaren Harz getränkte Glasfasern lage- und spannungsgeführt auf einen rotierenden, zylinderförmigen Kern aufgebracht werden.

7. Verfahren gemäß einem der Ansprüche 1 bis 6, **dadurch gekennzeichnet, dass** der Anteil der Glasfasern in der Hülse 55 bis 80 Gew.-% bezüglich der Summe aller Bestandteile der Hülse beträgt.

8. Verfahren gemäß einem der Ansprüche 1 bis 7, **dadurch gekennzeichnet, dass** man die Hülse mit einem metallischen Bauteil zur Verbesserung der Ableitung elektrischer Ladung von der Hülse auf einen metallischen Druckzylinder versieht, wobei das Bauteil die innere Außenfläche der Hülse mit dem Inneren der Hülsenwandung verbindet.

9. Verfahren gemäß Anspruch 8, **dadurch gekennzeichnet, dass** es sich bei dem metallischen Bauteil um eines ausgewählt aus der Gruppe bestehend aus einer Lochzunge, einem Metallring und einem Kontaktstift handelt.

10. Verfahren gemäß einem der Ansprüche 1 bis 9, **dadurch gekennzeichnet, dass** das eingesetzte UV-härtbare Harz elektrisch nicht leitfähig ist.

11. Glasfaserverstärkte Hülse für die Druckindustrie mindestens umfassend Glasfasern sowie ein gehärtetes Harz, **dadurch gekennzeichnet, dass** die Glasfasern eine haftvermittelnde Beschichtung umfassend elektrisch leitfähige Nanopartikel aufweisen.

12. Hülse gemäß Anspruch 11, **dadurch gekennzeichnet, dass** es sich bei den elektrisch leitfähigen Nanopartikeln um Kohlenstoffnanoröhren handelt.

13. Hülse gemäß einem der Ansprüche 11 oder 12, **dadurch gekennzeichnet, dass** die Hülse ein metallisches Bauteil zur Verbesserung der Ableitung elektrischer Ladung von der Druckhülse auf einen metallischen Druckzylinder aufweist, wobei das Bauteil die innere Außenfläche der Hülse mit dem Inneren der Hülsenwandung verbinden kann.

14. Hülse gemäß Anspruch 13, **dadurch gekennzeichnet, dass** es sich bei dem metallischen Bauteil um eines ausgewählt aus der Gruppe bestehend aus einer Lochzunge, einem Metallring und einem Kontaktstift handelt.

15. Hülse gemäß Anspruch 11, erhältlich gemäß einem Verfahren nach einem der Ansprüche 1 bis 10.

16. Hülse gemäß einem der Ansprüche 11 bis 15, **dadurch gekennzeichnet, dass** auf der äußeren Oberfläche der Hülse weitere Schichten unterschiedlicher Zusammensetzung aufgebracht sind.

17. Verwendung einer Hülse gemäß einem der Ansprüche 11 bis 16 zum Drucken, indem man die Hülse mit einer die äußere Oberfläche ganz oder teilweise umhüllenden Druckschicht versieht und die Hülse auf einen Druckzylinder einer Druckmaschine montiert.

## Claims

1. Method for producing glass fibre-reinforced sleeves for the printing industry by means of UV curing, comprising at least the following method steps:
(1) shaping of a UV-curable sleeve from glass fibres and a UV-curable resin,
(2) curing of the sleeve by UV irradiation,
where the glass fibres used are provided in an upstream method step with an adhesion-promoting coating, **characterized in that** the formulation used for the coating comprises electrically conductive nanoparticles.

2. Method according to Claim 1, **characterized in that** the electrically conductive nanoparticles comprise carbon nanotubes.

3. Method according to either of Claims 1 and 2, **characterized in that** the adhesion-promoting coating comprises organofunctional silanes.

4. Method according to any of Claims 1 to 3, **characterized in that** the weight fraction of the nanoparticles in the coating is 0.5 to 40 wt%, based on the sum of all of the constituents of the coating.

5. Method according to any of Claims 1 to 4, **characterized in that** the coating is used in an amount of 0.1 to 5 wt%, based on the glass fibers.

6. Method according to any of Claims 1 to 5, **characterized in that** method step. (1) is performed by means of the filament winding process, where glass fibres impregnated with the UV-curable resin are applied under positional and tension guidance to a rotating cylindrical core.

7. Method according to any of Claims 1 to 6, **characterized in that** the fraction of the glass fibres in the sleeve is 55 to 80 wt%, based on the sum of all of the constituents of the sleeve.

8. Method according to any of Claims 1 to 7, **characterized in that** the sleeve is provided with a metallic component for the purpose of improving the conduction of electrical charge from the sleeve onto a metallic printing cylinder, the component joining the interior outer face of the sleeve to the interior of the sleeve wall.

9. Method according to Claim 8, **characterized in that** the metallic component is one selected from the group consisting of a perforated tab, a metal ring, and a contact pin.

10. Method according to any of Claims 1 to 9, **characterized in that** the UV-curable resin used is electrically nonconductive.

11. Glass fibre-reinforced sleeve for the printing industry, at least comprising glass fibres and a cured resin, **characterized in that** the glass fibres have an adhesion-promoting comprising electrically conductive nanoparticles.

12. Sleeve according to Claim 11, **characterized in that** the electrically conductive nanoparticles comprise carbon nanotubes.

13. Sleeve according to either of Claims 11 and 12, **characterized in that** the sleeve has a metallic component for the purpose of improving the conduction of electrical charge from the printing sleeve onto a metallic printing cylinder, the component being able to join the interior outer face of the sleeve to the interior of the sleeve wall.

14. Sleeve according to Claim 13, **characterized in that** the metallic component is one selected from the group consisting of a perforated tab, a metal ring, and a contact pin.

15. Sleeve according to Claim 11, obtainable by a method according to any of Claims 1 to 10.

16. Sleeve according to any of Claims 11 to 15, **characterized in that** further layers with different compositions are applied on the exterior surface of the sleeve.

17. Use of a sleeve according to any of Claims 11 to 16 for printing, by providing the sleeve with a printing layer entirely or partially enveloping the exterior surface, and mounting the sleeve onto a printing cylinder of a printing machine.

## Revendications

1. Procédé de fabrication de manchons renforcés de fibres de verre pour l'industrie typographique par durcissement aux UV, comprenant au moins les étapes suivantes:
(1) former un manchon durcissable aux UV à partir de fibres de verre et d'une résine durcissable aux UV,
(2) durcir le manchon par exposition à un rayonnement UV,
dans lequel, dans une étape préalable, on dote les fibres de verre utilisées d'un revêtement favorisant l'adhérence, **caractérisé en ce que** la formulation utilisée pour le revêtement comprend des nanoparticules électriquement conductrices.

2. Procédé selon la revendication 1, **caractérisé en ce que** les nanoparticules électriquement conductrices sont des nanotubes de carbone.

3. Procédé selon une des revendications 1 ou 2, **caractérisé en ce que** le revêtement favorisant l'adhérence comprend des silanes organo-fonctionnels.

4. Procédé selon l'une quelconque des revendications 1 à 3, **caractérisé en ce que** la fraction pondérale des nanoparticules dans le revêtement vaut 0,5 à 40 % en poids par rapport à la somme de tous les composants du revêtement.

5. Procédé selon l'une quelconque des revendications 1 à 4, **caractérisé en ce que** l'on utilise le revêtement en une quantité de 0,1 à 5 % en poids par rapport aux fibres de verre.

6. Procédé selon l'une quelconque des revendications 1 à 5, **caractérisé en ce que** l'on exécute l'étape (1) au moyen du procédé d'enroulement de filament, dans lequel des fibres de verre imprégnées de la résine durcissable aux UV est guidée en position et en tension sur un noyau cylindrique tournant.

7. Procédé selon l'une quelconque des revendications 1 à 6, **caractérisé en ce que** la fraction de fibres de verre dans le manchon vaut 55 à 80 % en poids par rapport à la somme de tous les composants du manchon.

8. Procédé selon l'une quelconque des revendications 1 à 7, **caractérisé en ce que** l'on dote le manchon d'un composant métallique pour améliorer l'évacuation de la charge électrique du manchon sur un cylindre d'imprimerie métallique, dans lequel le composant relie la surface extérieure interne du manchon à l'intérieur de la paroi du manchon.

9. Procédé selon la revendication 8, **caractérisé en ce que** le composant métallique est un composant choisi dans le groupe composé d'une languette perforée, d'un anneau métallique et d'une tige de contact.

10. Procédé selon l'une quelconque des revendications 1 à 9, **caractérisé en ce que** la résine durcissable aux UV utilisée n'est pas électriquement conductrice.

11. Manchon renforcé de fibres de verre pour l'industrie typographique, comprenant au moins des fibres de verre ainsi qu'une résine durcie, **caractérisé en ce que** les fibres de verre présentent un revêtement favorisant l'adhérence comprenant des nanoparticules électriquement conductrices.

12. Manchon selon la revendication 11, **caractérisé en ce que** les nanoparticules électriquement conductrices sont des nanotubes de carbone.

13. Manchon selon une des revendications 11 ou 12, **caractérisé en ce que** le manchon présente un composant métallique pour améliorer l'évacuation de la charge électrique du manchon d'imprimerie à un cylindre d'imprimerie métallique, dans lequel le composant peut relier la face extérieure interne du manchon à l'intérieur de la paroi du manchon.

14. Manchon selon la revendication 13, **caractérisé en ce que** le composant métallique est un composant choisi dans le groupe composé d'une languette perforée, d'un anneau métallique et d'une tige de contact.

15. Manchon selon la revendication 11, réalisable par un procédé selon l'une quelconque des revendications 1 à 10.

16. Manchon selon l'une quelconque des revendications 11 à 15, **caractérisé en ce que** d'autres couches de composition différente sont déposées sur la surface extérieure du manchon.

17. Utilisation d'un manchon selon l'une quelconque des revendications 11 à 16 pour l'impression, du fait que l'on dote le manchon d'une couche de recouvrement entourant entièrement ou partiellement la surface extérieure et que l'on monte le manchon sur un cylindre d'imprimerie d'une machine d'imprimerie.
